# EUROPÄISCHE PATENTSCHRIFT

(11) **EP 1 974 970 B1**
(45) Veröffentlichungstag und Bekanntmachung des Hinweises auf die Patenterteilung: **14.07.2010**
(21) Anmeldenummer: 07006692.3
(22) Anmeldetag: 30.03.2007
(51) Int. Cl.: B60J 7/22

(54) **Schiebedachsystem**
Sliding roof system
Système de toit ouvrant

(43) Veröffentlichungstag der Anmeldung: 01.10.2008
(73) Patentinhaber: ArvinMeritor GmbH, 63128 Dietzenbach (DE)
(72) Erfinder: Biewer, Christian, 64839 Altheim (DE); Eis, Dirk, 65817 Eppstein (DE)
(74) Vertreter: Prinz & Partner

(56) Entgegenhaltungen:
- EP-A- 1 632 376
- EP-A2- 1 112 875
- DE-B3- 10 336 361

## Beschreibung

Die Erfindung betrifft ein Schiebedachsystem gemäß dem Oberbegriff des Anspruchs 1.

Bei bekannten Schiebedachsystemen kann ein Deckel eine Dachöffnung vollständig oder teilweise freigeben, da er verfahrbar an einer Führungsschiene angebracht ist, die sich an den Seitenrändern der Dachöffnung befindet und Teil eines Rahmens ist. Ferner kann eine Lüfterstellung eingenommen werden, indem der Deckel an seinem hinteren Ende ausgestellt wird.

Wenn der Deckel geschlossen wird, besteht die Gefahr, daß in dem immer kleiner werdenden Spalt zwischen Deckel und Dach ein Körperteil eines Fahrzeuginsassen eingeklemmt wird; beispielsweise wenn dieser seine Hand am Rand der Dachöffnung ablegt, um sich vom Frischluftstrom erfrischen zu lassen. Um dies zu verhindern, werden bei bekannten Schiebedachsystemen Einklemmschutzvorrichtungen eingebaut, die z.B. über die Strommessung des Deckelantriebmotors, durch Messung der Ankerdrehzahl, durch Schaltmatten oder Sicherheitskontaktleisten ein Einklemmen einer Hand oder Ähnlichem feststellen und die Schließbewegung des Deckels stoppen. Auch sind Blenden bekannt, die beim Schließen des Deckels aus der teilweise oder vollständig geöffneten Stellung einen sicheren Einklemmschutz gewährleisten. Die bekannten Vorrichtungen sind jedoch von begrenzter Wirksamkeit, wenn der Deckel aus der Lüfterstellung geschlossen wird. Aufgrund der dann herrschenden Hebelverhältnisse sprechen die bekannten Einklemmschutzvorrichtungen nicht immer im gewünschten Maße an.

Daher sind Schiebedachsysteme bekannt, bei denen eine Blende vorgesehen ist, die den seitlichen Spalt zwischen Deckel und Dach unzugänglich macht. Aus der DE 34 42 616 A1 ist eine streifenförmige Blende und aus der DE 33 08 065 A1 eine ziehharmonikaartige Blende bekannt. Beide Blenden sind fest mit dem Deckel und der Führungsmechanik verbunden und können deswegen nur bei sogenannten Schiebehebedächern, bei denen der Deckel beim Zurückfahren unter die feste Dachhaut bewegt wird und nicht bei sogenannten Spoilerdächern verwendet werden, bei denen der Deckel über die Dachhaut verschoben wird.

Aus der gattungsbildenden EP 1 632 376 ist ein Schiebedachsystem mit einer Seitenblende bekannt, die an ihrem vorderen Ende über eine Kulissenführung begrenzt beweglich mit einem Windabweiser und an ihrem hinteren Ende schwenkbar an einer Führungsschiene gekoppelt ist. Wenn der Deckel in der geschlossenen Stellung ist, liegt er an der Seitenblende an und hält sie in der abgesenkten Stellung. Sobald der Deckel in der Lüfterstellung ist, gibt er den hinteren Rand der Seitenblende frei. Da die Seitenblende begrenzt beweglich mit dem Windabweiser gekoppelt ist, ist ein Längenausgleich möglich, und der hintere Rand der Seitenblende kann sich nach oben in eine Abdeckstellung bewegen. Die Kulissenführung erlaubt also einen Längenausgleich und somit ein Verstellen der Seitenblende unabhängig von einer Bewegung des Windabweisers.

Aus der EP 1 112 875 ist ein Schiebedachsystem bekannt, das einen verstellbaren Deckel und eine unterhalb des Deckel angeordnete Seitenblende aufweist. Die Seitenblende ist fest mit einem Rahmen verbunden. Der Deckel ist durch eine Kulissenführung mit der Seitenblende verbunden, so dass er relativ zur Seitenblende verstellt werden kann. Am vorderen Rand der Seitenblende ist ein Windabweiser angebracht, der mitverstellt wird, wenn die Seitenblende aufgrund der Kopplung mit dem Deckel verstellt wird.

Die Aufgabe der Erfindung besteht darin, ein Schiebedachsystem zu schaffen, das einen Einklemmschutz schafft und kostengünstig herzustellen ist.

Dies wird bei einem eingangs genannten Schiebedachsystem dadurch erreicht, dass die Seitenblende mit dem Windabweiser zwangsgekoppelt ist und die Seitenblende gelenkig mit dem Rahmen verbunden ist.

Die Seitenblende ist so mit dem Windabweiser verbunden, daß sie bei einer Bewegung des Windabweisers verstellt wird. Die Seitenblende wird nur, d.h. allein, durch die Bewegung des Windabweisers verstellt und muß nicht separat angesteuert werden. Die Seitenblende kann daher unabhängig vom Deckel angehoben und abgesenkt werden. Der Deckel greift erfindungsgemäß nicht an der Seitenblende an, so daß Anschläge am Deckel entfallen. Die mit der Erfindung erzielten Vorteile bestehen insbesondere darin, daß das Schiebedachsystem auch bei Spoilerdächem angewendet werden kann, da keine feste Koppelung zwischen Seitenblende und Deckel besteht und somit ein Zurückfahren des Deckels ohne Seitenblende über die Dachhaut ermöglicht ist.

Vorzugsweise ist ein Ende der Seitenblende mit dem Rahmen verbunden und das entgegengesetzte Ende gelenkig mit dem Windabweiser verbunden. Die Seitenblende wird aufgrund der Zwangskopplung erst angehoben, wenn der Windabweiser ausgestellt wird. Das hintere Ende der Seitenblende, das am Rahmen befestigt ist, bleibt deswegen in der versenkten Stellung, selbst wenn der Deckel in die Lüfterstellung bewegt wurde.

Insbesondere ist die Seitenblende über ein Drehgelenk mit dem Windabweiser verbunden. Bei einer Bewegung des Windabweisers wird die Seitenblende mitgenommen. Das Drehgelenk kann einfach und somit kostengünstig hergestellt werden.

Die Seitenblende wird z.B. von einer Feder in eine angehobene Stellung beaufschlagt. Die Feder, die insbesondere eine Schenkelfeder ist, drückt das (in Fahrtrichtung gesehen) hintere Ende der Seitenblende in die angehobene Stellung, sobald der Windabweiser in die angehobene Stellung beaufschlagt wurde.

Vorzugsweise ist die Seitenblende eine Kunststoffplatte, die den Spalt zwischen dem Deckel und dem Rahmen in allen Stellungen des Deckels abdeckt.

Gemäß der bevorzugten Ausführungsform wird der Windabweiser von einer Windabweiserfeder in die angehobene Stellung beaufschlagt. Die Windabweiserfeder ist insbesondere eine Schenkelfeder und beaufschlagt den Windabweiser in die angehobene Stellung, sobald der Deckel oder die Führungsmechanik nicht mehr am Windabweiser angreift, also in einer teilweise oder vollständig geöffneten Stellung ist.

Weitere Merkmale und Vorteile der Erfindung ergeben sich aus den Unteransprüchen.

Die Erfindung wird nachfolgend anhand einer Ausführungsform beschrieben, die in den Zeichnungen dargestellt ist. In den Zeichnungen zeigen:
- Figur 1 schematisch ein Fahrzeugdach mit einem erfindungsgemäßen Schiebedachsystem mit einem Deckel in einer teilweise geöffneten Stellung, einer Seitenblende und einem Windabweiser in der angehobenen Stellung, und
- Figur 2 eine schematische Perspektivansicht des Schiebedachsystems mit dem Windabweiser und der Seitenblende in der angehobenen Stellung.

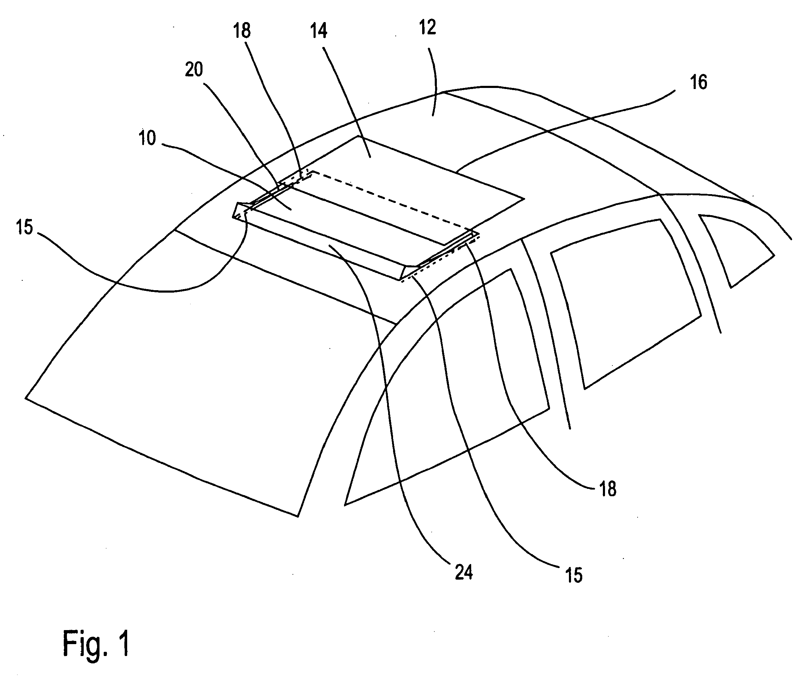

In Figur 1 ist ein Fahrzeugdach gezeigt, das mit einem Schiebedachsystem versehen ist. Das Schiebedachsystem weist eine Dachöffnung 10 in einem festen Dachteil 12 auf.

Die Dachöffnung 10 kann durch einen parallel zur Längsrichtung des Fahrzeugs verschiebbaren Deckel 14 teilweise oder vollständig freigelegt werden, da er verfahrbar an einer Führungsschiene 15 angebracht ist. Jeweils eine Führungsschiene 15 erstreckt sich dabei parallel zur Längsrichtung des Fahrzeugs, wobei die Führungsschienen 15 Teil eines Rahmens 20 sind. Ferner kann der Deckel 14 in eine Lüfterstellung ausgestellt werden, indem ein hinterer Rand 16 des Deckels 14 angehoben wird. Figur 1 zeigt den Deckel 14 in einer teilweise geöffneten Stellung.

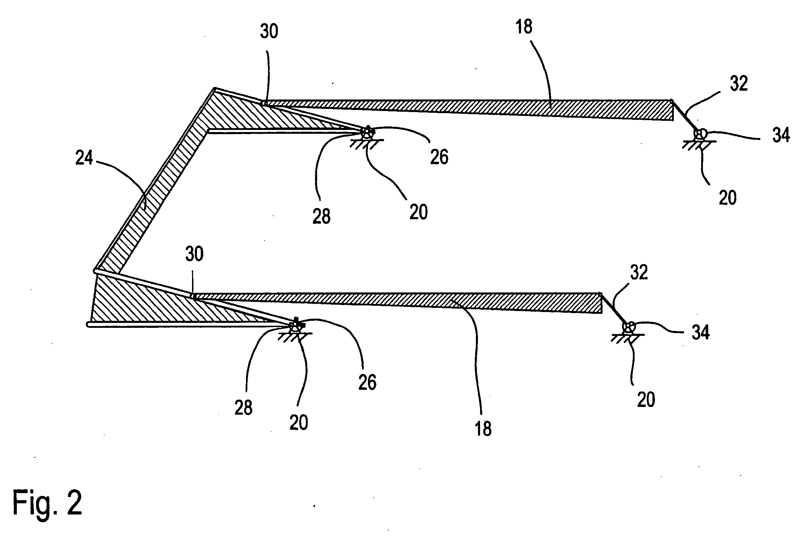

Am vorderen Rand der Dachöffnung 10 ist ein Windabweiser 24 angeordnet. Bei dem Windabweiser 24 handelt es sich um ein U-förmiges, starres Bauteil, das schwenkbar an einer Lagerstelle 26 (Figur 2) am Rahmen 20, insbesondere an der Führungsschiene 15, befestigt ist. An dem U-förmigen Bauteil ist beispielsweise ein Gewebe aus einem flexiblen und luftdurchlässigen Material vorgesehen. Eine schematisch gezeigte Windabweiserfeder 28, die an den Windabweiser 24 gekoppelt ist, kann ihn in die angehobene Stellung beaufschlagen. Der Windabweiser 24 hat die Funktion, die Strömungsverhältnisse dann zu verbessern, wenn sich der verstellbare Deckel 14 des Schiebedachsystems in einer zumindest teilweise geöffneten Stellung befindet.

Unterhalb des Deckels 14 ist eine Seitenblende 18 angeordnet, die sich seitlich entlang des Rahmens 20 erstreckt und einen Spalt zwischen dem Deckel 14 und der Führungsschiene 15 abdeckt. Bei der Seitenblende 18 handelt es sich um eine im allgemeinen dreieckige Kunststoffplatte, die an ihrem vorderen Ende über ein Drehgelenk 30 mit dem Windabweiser 24 zwangsgekoppelt ist. An ihrem hinteren Ende ist die Seitenblende 18 gelenkig mit dem Rahmen 20 verbunden. Dabei ist eine Stange 32 vorgesehen, die einerseits gelenkig mit der Seitenblende 18 und andererseits gelenkig mit dem Rahmen 20 verbunden ist.

Wenn der Deckel 14 in der geschlossenen Stellung ist, hält der vordere Abschnitt des Deckels 14 den Windabweiser 24 entgegen der Wirkung der Windabweiserfeder 28 in der versenkten Stellung. Die Seiten blende 18, die über das Drehgelenk 30 mit dem Windabweiser 24 verbunden ist, erstreckt sich seitlich entlang des Rahmens 20 unterhalb des Deckels 14.

Das Ausstellen des Deckels 14 in die Lüfterstellung erfolgt motorisch und ist bekannt. In der Lüfterstellung befindet sich der vordere Rand des Deckels 14 in einer nicht angehobenen Stellung. Dadurch hält der vordere Rand des Deckels 14 oder eine Führungsmechanik den Windabweiser 24 weiterhin in der versenkten Stellung, und auch die Seitenblende 18 wird in der Stellung gehalten, in der sie seitlich entlang des Rahmens 20 liegt. Obwohl der hintere Rand 16 des Deckels 14 angehoben wurde, um die Lüfterstellung zu erreichen, konnte sich nämlich der hintere Abschnitt der Seitenblende 18 nicht nach oben bewegen, da die Seitenblende 18 mit dem Windabweiser 24 zwangsgekoppelt ist und an ihrem (in Fahrtrichtung gesehen) hinteren Rand unverschieblich gelagert ist. Die Seitenblende 18 deckt in ihrer versenkten Stellung, insbesondere aufgrund ihrer dreieckigen Form, einen Spalt zwischen dem Deckel 14 und dem Rahmen 20 ab und bietet so einen Einklemmschutz, wenn der Deckel 14 in der Lüfterstellung ist.

Die Figuren 1 und 2 zeigen das Schiebedachsystem mit dem Deckel 14 in einer teilweise geöffneten Stellung. Durch die Bewegung des Deckels 14 nach hinten wurde der Windabweiser 24 freigegeben. Dadurch konnte er von der vorgespannten Windabweiserfeder 28 nach oben in die angehobene Stellung bewegt werden. Dabei wurde der vordere Abschnitt der Seiten blende 18 aufgrund der Zwangskopplung mitgenommen und die Seitenblende 18 nach hinten verschoben. Die Stange 32, die von einer Feder 34 im Uhrzeigersinn beaufschlagt wird, ermöglicht den notwendigen Längsausgleich. In dieser Stellung deckt die Seitenblende 18 einen Spalt zwischen dem Deckel 14 und dem Dachteil 12 ab und verursacht keine störenden Nebengeräusche aufgrund der Windströmung.

Um die Ausgangsstellung erneut herzustellen, wird der Deckel 14 in die geschlossene Stellung gefahren. Dabei drückt er den Windabweiser 24 nach unten und spannt die Windabweiserfeder 28 vor. Der vordere Abschnitt der Seitenblende 18 wird vom Windabweiser 24 nach unten in ihre abgesenkte Stellung gezogen, und die Stange 32 am hinteren Ende der Seitenblende 18 gegen den Uhrzeigersinn geschwenkt, wodurch die Feder 34 vorgespannt wird.

Die Feder 34, die an der Stange 32 angreift, könnte auch entfallen.

Die Seitenblende 18 wird allein durch die Zwangskopplung mit dem Deckel 14 abgesenkt und angehoben.

### Bezugszeichenliste

- 10: Dachöffnung
- 12: Dachteil
- 14: Deckel
- 15: Führungsschiene
- 16: hinterer Rand des Deckels
- 18: Seitenblende
- 20: Rahmen
- 24: Windabweiser
- 26: Lagerstelle
- 28: Windabweiserfeder
- 30: Drehgelenk
- 32: Stange
- 34: Feder

## Patentansprüche

1. Schiebedachsystem mit
einem Rahmen (20),
einem Deckel (14), der zwischen einer geschlossenen Stellung, einer Lüfterstellung und einer geöffneten Stellung verschiebbar ist,
einem Windabweiser (24) und
einer Seitenblende (18), die sich seitlich entlang des Rahmens (20), unterhalb des Deckels (14) erstreckt, wenn der Deckel (14) in der Lüfterstellung, in einer teilweise geöffneten oder der geöffneten Stellung ist,
**dadurch gekennzeichnet, dass**
die Seitenblende (18) mit dem Windabweiser (24) zwangsgekoppelt ist und die Seitenblende (18) gelenkig mit dem Rahmen (20) verbunden ist.

2. Schiebedachsystem nach Anspruch 1, **dadurch gekennzeichnet, dass** ein Ende der Seitenblende (18) mit dem Rahmen (20) verbunden ist und das entgegengesetzte Ende gelenkig mit dem Windabweiser (24) verbunden ist.

3. Schiebedachsystem nach Anspruch 1 oder 2, **dadurch gekennzeichnet, dass** die Seitenblende (18) über ein Drehgelenk (30) mit dem Windabweiser (24) verbunden ist.

4. Schiebedachsystem nach einem der vorhergehenden Ansprüche, **dadurch gekennzeichnet, dass** der Deckel (14) nicht an der Seitenblende (18) angreift.

5. Schiebedachsystem nach einem der vorhergehenden Ansprüche, **dadurch gekennzeichnet, dass** eine Stange (32) vorgesehen ist, die Teil der gelenkigen Lagerung der Seitenblende (18) ist.

6. Schiebedachsystem nach einem der vorhergehenden Ansprüche, **dadurch gekennzeichnet, dass** die Seitenblende (18) von einer Feder (34) in eine angehobene Stellung beaufschlagt wird.

7. Schiebedachsystem nach einem der vorhergehenden Ansprüche, **dadurch gekennzeichnet, dass** die Seitenblende (18) eine Kunststoffplatte ist.

8. Schiebedachsystem nach einem der vorhergehenden Ansprüche, **dadurch gekennzeichnet, dass** der Windabweiser (24) von einer Windabweiserfeder (28) in die angehobene Stellung beaufschlagt wird.

## Claims

1. Sliding roof system, with
a frame (20),
a cover (14) which is displaceable between a closed position, a venting position and an open position,
a wind deflector (24), and
a side panel (18) which extends laterally along the frame (20) below the cover (14) when the cover (14) is in the venting position, in a partially open or in the open position,
**characterized in that** the side panel (18) is forcibly coupled to the wind deflector (24), and the side panel (18) is connected to the frame (20) in an articulated manner.

2. Sliding roof system according to Claim 1, **characterized in that** one end of the side panel (18) is connected to the frame (20) and the opposite end is connected to the wind deflector (24) in an articulated manner.

3. Sliding roof system according to Claim 1 or 2, **characterized in that** the side panel (18) is connected to the wind deflector (24) via a swivel joint (30).

4. Sliding roof system according to one of the preceding claims, **characterized in that** the cover (14) does not act on the side panel (18).

5. Sliding roof system according to one of the preceding claims, **characterized in that** a rod (32) which is part of the articulated mounting of the side panel (18) is provided.

6. Sliding roof system according to one of the preceding claims, **characterized in that** the side panel (18) is pressurized by a spring (34) into a raised position.

7. Sliding roof system according to one of the preceding claims, **characterized in that** the side panel (18) is a plastic plate.

8. Sliding roof system according to one of the preceding claims, **characterized in that** the wind deflector (24) is pressurized by a wind deflector spring (28) into the raised position.

## Revendications

1. Système de toit ouvrant comprenant :
un cadre (20),
un couvercle (14), qui peut être déplacé entre une position fermée, une position de ventilation et une position ouverte,
un déflecteur de vent (24) et
un bandeau latéral (18), qui s'étend latéralement le long du cadre (20), sous le couvercle (14), quand le couvercle (14) est dans la position de ventilation, dans une position partiellement ouverte ou dans la position ouverte,
**caractérisé en ce que**
le bandeau latéral (18) est accouplé de force au déflecteur de vent (24) et le bandeau latéral (18) est connecté de manière articulée au cadre (20).

2. Système de toit ouvrant selon la revendication 1, **caractérisé en ce qu'**une extrémité du bandeau latéral (18) est connectée au cadre (20) et l'extrémité opposée est connectée de manière articulée au déflecteur de vent (24).

3. Système de toit ouvrant selon la revendication 1 ou 2, **caractérisé en ce que** le bandeau latéral (18) est connecté par le biais d'une articulation rotative (30) au déflecteur de vent (24).

4. Système de toit ouvrant selon l'une quelconque des revendications précédentes, **caractérisé en ce que** le couvercle (14) ne vient pas en prise avec le bandeau latéral (18).

5. Système de toit ouvrant selon l'une quelconque des revendications précédentes, **caractérisé en ce qu'**une tige (32) est prévue, laquelle fait partie du support articulé du bandeau latéral (18).

6. Système de toit ouvrant selon l'une quelconque des revendications précédentes, **caractérisé en ce que** le bandeau latéral (18) est sollicité par un ressort (34) dans une position soulevée.

7. Système de toit ouvrant selon l'une quelconque des revendications précédentes, **caractérisé en ce que** le bandeau latéral (18) est une plaque en plastique.

8. Système de toit ouvrant selon l'une quelconque des revendications précédentes, **caractérisé en ce que** le déflecteur de vent (24) est sollicité dans la position soulevée par un ressort de déflecteur de vent (28).
